**Europäisches Patentamt**

**European Patent Office**

**Office européen des brevets**

(19)

(11) Numéro de publication : **0 018 300**
**B1**

(12) **FASCICULE DE BREVET EUROPÉEN**

(45) Date de publication du fascicule du brevet :
**28.04.82**

(21) Numéro de dépôt : **80400548.6**

(22) Date de dépôt : **23.04.80**

(51) Int. Cl.³ : **F 02 K   9/97**

(54) **Tuyère de propulseur à divergent déployable.**

(30) Priorité : **24.04.79 FR 7910366**

(43) Date de publication de la demande :
**29.10.80 (Bulletin 80/22)**

(45) Mention de la délivrance du brevet :
**28.04.82 Bulletin 82/17**

(84) Etats contractants désignés :
**DE GB IT**

(56) Documents cités :
**FR - A - 2 422 831**
**US - A - 3 933 310**

(73) Titulaire : **SOCIETE NATIONALE INDUSTRIELLE
AEROSPATIALE Société dite:
37 Boulevard de Montmorency
F-75781 Paris Cedex 16 (FR)**

(72) Inventeur : **Calabro, Max Jean-Pierre
15 rue des Cheremonts
F-92000 Nanterre (FR)**
Inventeur : **Girard, Hervé Yves Christian
3 Parc Delage
F-78130 Les Mureaux (FR)**
Inventeur : **Realland, Jean-Claude Joseph
48 Allée de la Claire Fontaine
F-78250 Meulan (FR)**

(74) Mandataire : **Barnay, André François et al
Cabinet Barnay 80 rue Saint-Lazare
F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

EP 0 018 300 B1

## Tuyère de propulseur à divergent déployable

La demande de brevet français n° 78/03090 (publiée sous le n° 2 422 831) décrit et revendique une tuyère de propulseur comprenant un divergent déployable constitué par une succession d'anneaux rigides reliés entre eux et au corps de tuyère par des anneaux souples. Ceux-ci comportent un support annulaire souple constitué par exemple par une feuille d'élastomère renforcée éventuellement de fibres synthétiques, et une fourrure revêtant la face interne dudit support. Cette fourrure est formée de structures textiles offrant une grande liberté d'orientation.

Dans une forme de réalisation préférée d'un tel divergent déployable, le support souple constituant, avec la fourrure, chacun des anneaux souples est doublé d'une sous-couche rapportée sur la feuille d'élastomère. A cette sous-couche, qui peut être composée d'une peau faite de fibres de carbone ou de silice, ou de deux peaux superposées, sont attachées les structures textiles, telles que des fils, de la fourrure.

Les anneaux rigides sont constitués par une couche en un matériau d'isolation thermique tel qu'un composite de fibres de carbone ou de silice et de résine phénolique, éventuellement revêtue extérieurement d'une enveloppe métallique.

Les liaisons anneau souple-anneau rigide (ou - corps de tuyère) sont assurées par débordement, sur une faible partie d'un anneau rigide adjacent, de la sous-couche et du support souple. Afin de simplifier la fabrication d'un tel divergent déployable et d'en améliorer la tenue mécanique générale, la présente invention a pour objet une tuyère à divergent déployable offrant la structure générale décrite dans la demande de brevet précitée. Toutefois, au lieu d'être subdivisés en feuilles annulaires distinctes constituant séparément les anneaux souples du divergent, le support souple et la sous-couche précités s'étendent sur toute la longueur du divergent et constituent ainsi une enveloppe conique souple s'étendant continûment dans les zones déformables et dans les zones indéformables du divergent, tandis que les anneaux rigides correspondant à ces dernières zones sont réalisés au moyen de couches annulaires de matériau rigide composite d'isolation thermique.

Une telle disposition simplifie la fabrication et l'assemblage des éléments constitutifs du divergent déployable, tous les anneaux souples étant réalisés en une seule pièce. Elle contribue à améliorer la tenue mécanique de l'ensemble du fait de la continuité de la sous-couche qui constitue la partie résistante de l'enveloppe souple. Elle permet de conserver le même matériau de veine tout le long de la tuyère et d'éviter ainsi les variations éventuelles de profil dues à une résistance différente à l'ablation entre le matériau « souple » et les matériaux composites du divergent de la tuyère.

Selon l'invention, la fourrure précitée peut s'étendre également sur toute la longueur du divergent, en offrant éventuellement une épaisseur évolutive, tandis que le matériau composite formant les anneaux rigides peut être situé entre la sous-couche et le support souple, ce dernier venant recouvrir totalement la face externe du divergent par collage ou imprégnation d'une part sur la sous-couche dans les zones déformables et d'autre part sur la couche rigide de matériau composite dans les zones indéformables.

Dans une variante d'exécution, le matériau composite formant les anneaux rigides peut être au contraire situé à l'extérieur du support souple, ce dernier tapissant directement la totalité de la face externe de la sous-couche. Chaque couche annulaire de matériau composite formant un anneau rigide est alors de préférence déposée sur le support souple par surbobinage ou par drapage de fibres ou de mèches textiles imprégnées de résine polymérisable.

Dans une autre variante, la fourrure ne s'étend pas au-delà des zones déformables du divergent et fait place, dans les zones indéformables, à une couche annulaire de matériau composite formant chaque anneau rigide, solidarisée à la face interne de la sous-couche, tandis que le support souple tapisse directement la totalité de la face externe de la sous-couche.

Les parties débordantes de la sous-couche et du support souple précités sur le corps de tuyère peuvent avantageusement être solidarisées à celui-ci par un surbobinage d'un composite fibres/résine.

La description qui va suivre, en regard des dessins annexes à titre d'exemples non limitatifs, permettra de bien comprendre comment la présente invention peut être mise en pratique.

La figure 1 représente une demi-section axiale d'un divergent selon la présente invention, en position de stockage.

Les figures 2 et 3 représentent de la même manière deux variantes de réalisation d'un divergent selon la présente invention.

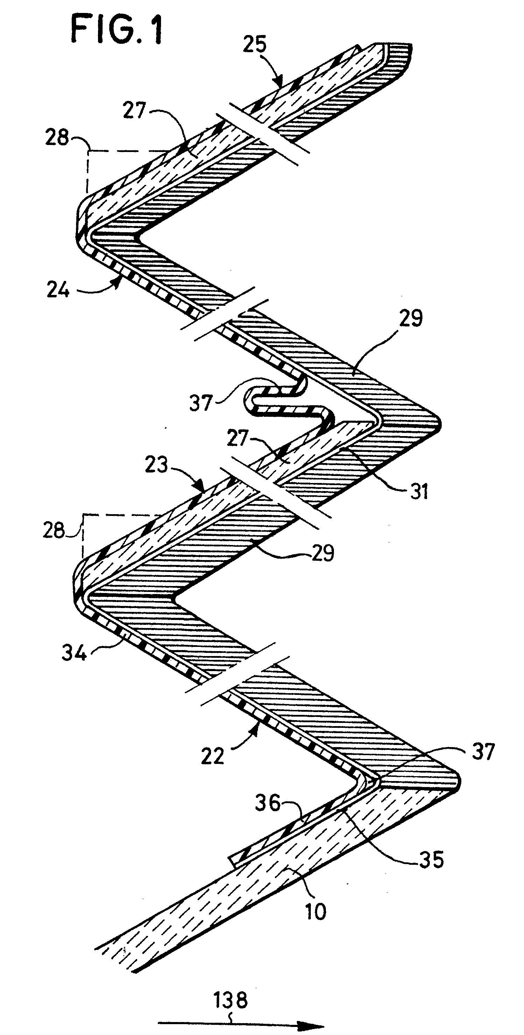

Sur la figure 1, on a représenté un divergent de tuyère selon l'invention, comprenant, à la suite d'un corps de tuyère 10 rigide, une succession d'anneaux alternativement souples et rigides, de références générales 22 à 25. La direction de l'axe de la tuyère est indiquée par la flèche 138. Les anneaux souples et rigides offrent une partie commune constituée par une sous-couche souple 31 s'étendant sur toute la longueur du divergent, ici représenté en position repliée de stockage. Cette sous-couche est composée d'une peau ou de deux peaux superposées réalisées en tissu ou en tricot de fibres réfractaires (carbone ou silice par exemple). Sur toute la face interne de cette sous-couche 31 est accrochée une moquette ou fourrure 29 de structures textiles constituées et agencées selon les enseignements de la demande de brevet français n° 78/03090 publiée sous le n° 2 422 831. En particulier, ces structures textiles sont des structures réfractaires par exemple à base de carbone, de silice, de carbone ou de silice avec imprégnation de résine, etc. Eventuellement dans le cas de divergents particulièrement longs, cette fourrure a, comme représenté, une épaisseur évolutive tout le long de son profil, dans la mesure où les sollicitations thermiques sont moins importantes vers la zone d'extrémité. Sur la face externe de la sous-couche 31 est rapportée, dans les zones indéformables des anneaux rigides, une couche annulaire 27 beaucoup plus épaisse que la sous-couche 31, réalisée en matériau composite d'isolation thermique. Cette couche 27 est formée de fibres ou de mèches textiles (fibres ou mèches de polyamides aromatiques, de verre, de carbone, de silice, etc.) imprégnées de résine et polymérisées par la suite. Elle est reliée à la sous-couche 31 soit par un moyen mécanique, soit par collage, soit par piquage, soit par divers de ces moyens combinés. Une feuille élastomère 34 formant un support souple vient ensuite recouvrir totalement la face externe du divergent par collage ou imprégnation à la fois sur la sous-couche 31 dans les zones déformables pour constituer les anneaux souples 22 et 24, et sur la couche 27 rigide dans les zones indéformables pour constituer les anneaux rigides 23 et 25.

La sous-couche 31 et le support souple en élastomère 34 débordent ensemble en 35, 36 sur le corps de tuyère 10, auquel ils sont fixés par collage par exemple. Au droit des plis d'articulation 37, la feuille d'élastomère 34 est désolidarisée de la sous-couche 31 afin de permettre son élongation lors des mouvements de déploiement de la tuyère.

Chaque anneau rigide 23, 25 comporte à sa partie antérieure un talon 28 pour la reprise des efforts résultant de l'accrochage de vérins de commande du déploiement de la tuyère, non représentés.

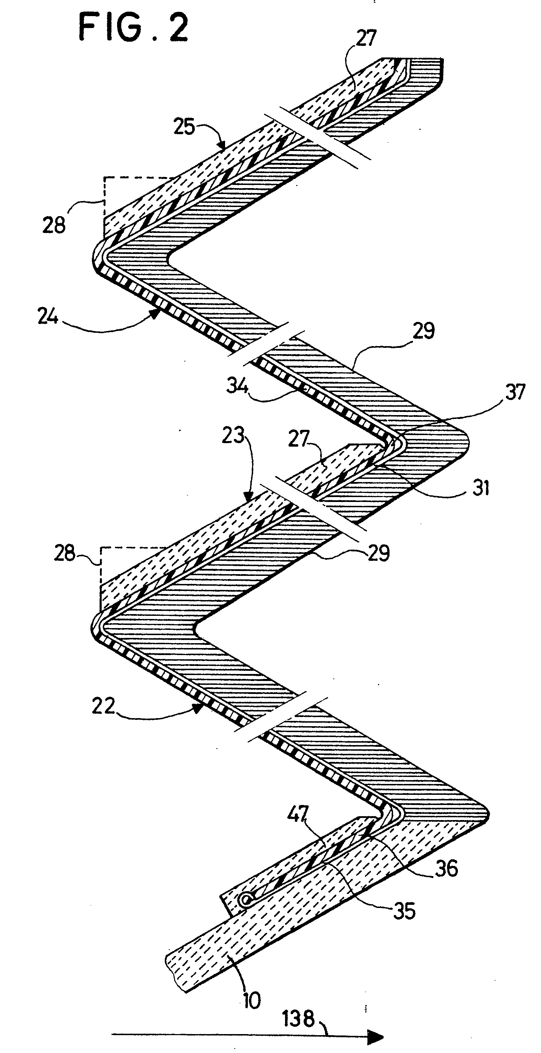

Dans la variante de réalisation représentée à la figure 2, la sous-couche annulaire souple 31 s'étend également, comme dans la forme d'exécution de la figure 1, sur toute la longueur du divergent. Elle est aussi revêtue sur toute sa face interne d'une fourrure 29 de structures textiles à grande liberté d'orientation. Une feuille d'élastomère 34 formant un support souple est appliquée sur la face externe de la sous-couche 31 pour en faire partie intégrante. Elle peut être simplement superposée dans les zones déformables pour constituer les anneaux souples 22, 24. Elle est liée par tout moyen approprié à la sous-couche 31 dans les zones indéformables. Celles-ci sont obtenues en revêtant extérieurement le support souple 34 d'une couche 27 de matériau composite d'isolation thermique. Cette couche est formée par drapage ou bobinage in situ de fibres ou de mèches textiles (fibres ou mèches de polyamides aromatiques, de verre, de carbone, de silice, etc.) imprégnées de résine polymérisée par la suite, pour constituer les anneaux rigides 23, 25. L'obtention de points de reprise d'effort ou talons 28 sur ces derniers (accrochage des vérins par exemple) se fait alors de manière classique en disposant des inserts lors du bobinage, par exemple. Les parties 35, 36 de la sous-couche 31 et de la feuille d'élastomère 34 débordent sur le corps de tuyère 10 auquel elles sont solidarisées par un surbobinage 47 d'un composite fibres/résine.

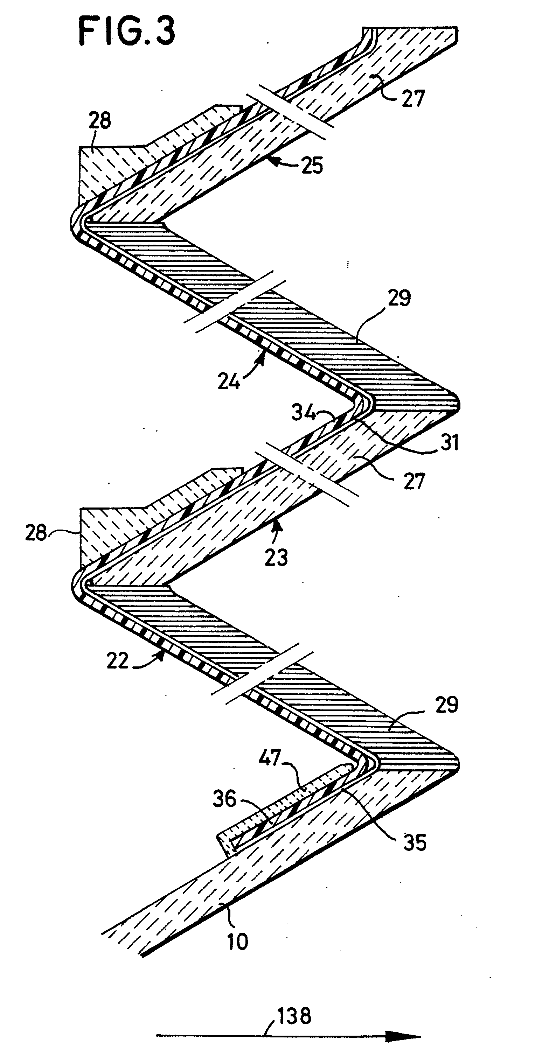

Sur la figure 3, on a représenté une seconde variante de réalisation d'un divergent déployable comportant une succession d'anneaux rigides et d'anneaux souples. Dans cette variante, la sous-couche 31 est faite en tissu ou tricot de carbone en une seule pièce de la taille du divergent déployable. La face externe de cette sous-couche est revêtue en totalité, par collage ou imprégnation, d'une feuille d'élastomère 34 constituant un support souple.

Dans les zones déformables, une fourrure 29 de structures textiles est accrochée sur la paroi interne de la sous-couche 31 et forme avec le support les anneaux souples 22 et 24.

Dans les zones indéformables, les anneaux rigides 23, 25 sont obtenus au moyen d'une couche épaisse 27 réalisée en matériau composite d'isolation thermique et solidarisée à la face interne de la sous-couche 31 soit par collage et/ou piquage, soit par liaison mécanique.

Sur la face externe des anneaux rigides est rapportée une pièce de reprise d'effort ou talon 28 réalisée en matériau composite ou métallique, tandis que les parties débordantes 35, 36 sont fixées sur le corps de tuyère 10 au moyen d'une bride rapportée 47 composite ou métallique.

## Revendications

1. Tuyère de propulseur comprenant un corps de tuyère (10) et un divergent déployable constitué par une succession de zones annulaires alternativement déformables et indéformables — anneaux souples (22, 24) et anneaux rigides (23, 25) —, les anneaux souples étant formés par un support annulaire souple (34) en élastomère et par une fourrure (29) composée de structures textiles réfractaires offrant une grande liberté d'orientation et attachées à une sous-couche intermédiaire (31) superposée au support souple (34), le premier anneau souple (22) étant relié au corps de tuyère (10) par des parties débordantes (35, 36) de ladite sous-couche (31) et dudit support souple (34), tandis que les anneaux rigides (23, 25) sont réalisés en un matériau indéformable composite d'isolation thermique, caractérisée par le fait que le support annulaire souple (34) et la sous-couche intermédiaire (31) s'étendent sur toute la longueur du divergent.

2. Tuyère selon la revendication 1, caractérisée par le fait que la fourrure (29) s'étend également sur toute la longueur du divergent.

3. Tuyère selon la revendication 2, caractérisée par le fait que la fourrure (29) a une épaisseur évolutive tout le long du profil du divergent.

4. Tuyère selon la revendication 2 ou 3, caractérisée par le fait que le matériau composite formant les anneaux rigides (23, 25) est situé entre la sous-couche (31) et le support souple (34), ce dernier venant recouvrir totalement la face externe du divergent par collage ou imprégnation d'une part sur la sous-couche (31) dans les zones déformables et d'autre part sur la couche rigide (27) de matériau composite dans les zones indéformables.

5. Tuyère selon la revendication 2 ou 3, caractérisée par le fait que le matériau composite formant les anneaux rigides (23, 25) est situé à l'extérieur du support souple (34), ce dernier tapissant directement la totalité de la face externe de la sous-couche (31).

6. Tuyère selon la revendication 5, caractérisée par le fait que chaque couche annulaire (27) de matériau composite formant un anneau rigide (23, 25) est déposée sur le support souple (34) par surbobinage ou par drapage de fibres ou de mèches textiles imprégnées de résine polymérisable.

7. Tuyère selon la revendication 1, caractérisée par le fait que la fourrure (29) ne s'étend pas au-delà des zones déformables du divergent et fait place, dans les zones indéformables, à une couche annulaire (27) de matériau composite formant chaque anneau rigide (23, 25), solidarisée à la face interne de la sous-couche (31), tandis que le support souple (34) tapisse directement la totalité de la face externe de la sous-couche (31).

8. Tuyère selon l'une quelconque des revendications 1 à 7, caractérisée par le fait que les parties débordantes (35, 36) de la sous-couche (31) et du support souple (34) sur le corps de tuyère (10) lui sont solidarisées par un surbobinage (47) d'un composite fibres/résine.

## Claims

1. Propulsion unit nozzle, comprising a nozzle member (10) and a foldable divergent section constituted by a series of alternate deformable and non-deformable annular zones — flexible rings (22, 24) and rigid rings (23, 25) —, the flexible rings being formed by a flexible annular support (34) of elastomer and by a pile fabric (29) comprising refractory textile structures affording high freedom of orientation and attached to an intermediate sub-layer (31) superposed on the flexible support (34), the first flexible ring (22) being connected to the nozzle member (10) by parts (35, 36) extending from the sub-layer (31) and the flexible support (34), whilst the rigid rings (23, 25) are made of a non-deformable composite thermal insulation material, characterized in that the flexible annular support (34) and the intermediate sub-layer (31) extend over the whole length of the divergent section.

2. Nozzle according to claim 1, characterized in that the pile fabric (29) also extends over the whole length of the divergent section.

3. Nozzle according to claim 2, characterized in that the pile fabric (29) has a thickness which varies along the cross-section of the divergent section.

4. Nozzle according to claim 2 or 3, characterized in that the composite material forming the rigid rings (23, 25) is located between the sub-layer (31) and the flexible support (34), the latter covering all the external face of the divergent section by adhesion to or impregnation both on the sub-layer (31) in the deformable zones and also on the rigid layer (27) of the composite material in the non-deformable zones.

5. Nozzle according to claim 2 or 3, characterized in that the composite material forming the rigid rings (23, 25) is located on the exterior of the flexible support (34), the latter directly covering the entire external face of the sub-layer (31).

6. Nozzle according to claim 5, characterized in that each annular layer (27) of composite material forming a rigid ring (23, 25) is located on the flexible support (34) by winding on or draping on fibres or textile braids impregnated with a polymerizable resin.

7. Nozzle according to claim 1, characterized in that the pile fabric (29) does not extend beyond the deformable zones of the divergent section and is replaced in the non-deformable zones by an annular layer (27) of composite material forming each rigid ring (23, 25), connected to the internal face of the sub-layer (31), whilst the flexible support (34) directly covers all the external face of the sub-layer (31).

8. Nozzle according to any of claims 1 to 7, characterized in that the parts (35, 36) overlapping the sub-layer (31) and the flexible support (34) on the nozzle member (10) are connected to it by a winding (27) of a fibre/resin composite.

## Ansprüche

1. Triebwerksdüse mit einem Düsenkörper (10) und einem ausfaltbaren Auslaufteil, wobei das Auslaufteil aus einer Folge von ringförmigen, wechselweise verformbaren und nicht verformbaren Abschnitten gebildet ist — nachgiebige ringförmige Abschnitte (22, 24) und starre ringförmige Abschnitte (23, 25) —, wobei die nachgiebigen ringförmigen Abschnitte (22, 24) aus einer nachgiebigen ringförmigen Stützlage (34) aus einem elastischen Kunststoff (Elastomer), einer Auskleidung (29) aus feuerfestem, weitestgehend frei ausrichtbarem Textilmaterial und einer beide verbindenden, auf der Stützlage (34) aufgelegten Zwischenlage (31) aufgebaut sind, wobei der erste nachgiebige ringförmige Abschnitt (22) mit dem Düsenkörper (10) vermittels übergreifender Abschnitte (35, 36) der Zwischenlage (31) und der nachgiebigen Stützlage (34) verbunden ist und wobei die starren ringförmigen Abschnitte (23, 25) aus einem nicht verformbaren, thermisch isolierenden Mischmaterial bestehen, dadurch gekennzeichnet, daß sich die nachgiebige ringförmige Stützlage (34) und die Zwischenlage (31) über die gesamte Länge des Auslaufteiles erstrecken.

2. Triebwerksdüse nach Anspruch 1, dadurch gekennzeichnet, daß sich die Auskleidung (29) gleichfalls über die gesamte Länge des Auslaufteiles erstreckt.

3. Triebwerksdüse nach Anspruch 2, dadurch gekennzeichnet, daß die Auskleidung (29) eine sich über die gesamte Länge des Auslaufteiles verändernde Dicke aufweist.

4. Triebwerksdüse nach Anspruch 2 oder 3, dadurch gekennzeichnet, daß das Mischmaterial der starren ringförmigen Abschnitte (23, 25) zwischen der Zwischenlage (31) und der Stützlage (34) vorgesehen ist und daß die Stützlage (34) die Außenseite des Auslaufteiles vollständig überdeckt und durch Klebung oder Imprägnierung einerseits in den verformbaren Abschnitten mit der Zwischenlage (31), andererseits in den nicht verformbaren Abschnitten mit den starren ringförmigen Einlagen (27) aus Mischmaterial verbunden ist.

5. Triebwerksdüse nach Anspruch 2 oder 3, dadurch gekennzeichnet, daß das Mischmaterial der starren ringförmigen Abschnitte (23, 25) auf der Außenseite der nachgiebigen ringförmigen Stützlage (34) angeordnet ist, so daß über die Stützlage (34) unmittelbar die gesamte Außenseite der Zwischenlage (31) abgedeckt ist.

6. Triebwerksdüse nach Anspruch 5, dadurch gekennzeichnet, daß jede der aus Mischmaterial bestehenden und die starren ringförmigen Abschnitte (23, 25) bildenden starren ringförmigen Einlagen (27) auf der nachgiebigen ringförmigen Stützlage (34) vermittels einer Umwicklung oder Verkleidung aus mit polymerisierbarem Harz getränkten Textilfasern oder Textilstreifen befestigt ist.

7. Triebwerksdüse nach Anspruch 1, dadurch gekennzeichnet, daß die Auskleidung (29) nur in den verformbaren Abschnitten (22, 24) des Auslaufteiles vorgesehen ist und daß in den nicht verformbaren Abschnitten (23, 25) anstatt dessen eine die starren ringförmigen Abschnitte (23, 25) bildende starre ringförmige Einlage (27) aus Mischmaterial vorgesehen ist und daß die starre ringförmige Einlage (27) an der Innenseite der Zwischenlage (31) anhaftet, während über die nachgiebige ringförmige Stützlage (34) unmittelbar die gesamte Außenseite der Zwischenlage (31) abgedeckt ist.

8. Triebwerksdüse nach einem der Ansprüche 1 bis 7, dadurch gekennzeichnet, daß die den Düsenkörper (10) übergreifenden Abschnitte (35, 36) der Zwischenlage (31) und der nachgiebigen Stützlage (34) mit dem Düsenkörper (10) vermittels einer Umwicklung aus harzgetränkten Textilfasern oder Textilstreifen verbunden sind.

# FIG.1

FIG.2

0 018 300

2

# FIG.3

138